# FASCICULE DE BREVET EUROPEEN

(11) **EP 0 674 754 B1**
(45) Date de publication et mention de la délivrance du brevet: **17.12.1997**
(21) Numéro de dépôt: 94931079.1
(22) Date de dépôt: 18.10.1994
(51) Int. Cl.: F16G 3/00

(54) **DISPOSITIF DE JONCTIONNEMENT POUR BANDES TRANSPORTEUSES ET PROCEDE DE FIXATION DUDIT DISPOSITIF SUR LES EXTREMITES DE BANDES TRANSPORTEUSES**
VERBINDUNGSVORRICHTUNG FÜR FÖRDERGURTE UND BEFESTIGUNGSVERFAHREN DIESER VORRICHTUNG AN ENDEN VON FÖRDERGURTEN
DEVICE FOR JOINING CONVEYOR BELTS AND METHOD OF SECURING SAID DEVICE TO THE CONVEYOR BELT ENDS

(30) Priorité: 20.10.1993 FR 9312522
(43) Date de publication de la demande: 04.10.1995
(73) Titulaire: Aser, F-42405 Saint-Chamond (FR)
(72) Inventeur: JAKOB, Horst, F-30360 Deaux (FR)
(74) Mandataire: Simonnot, Bernard
(86) Numéro de dépôt international: FR9401206
(87) Numéro de publication internationale: WO9511393

(56) Documents cités:
- DE-A- 2 532 409
- DE-C- 832 366

## Description

La présente invention concerne un dispositif de jonctionnement pour bande transporteuse souple, résistant et rapide à mettre en place, ainsi que des procédés de fixation.

On connaît les bandes transporteuses, généralement réalisées en une matière souple et élastique, comportant le plus souvent une armature porteuse, ladite matière étant un caoutchouc, synthétique ou éventuellement naturel, ou une matière de synthèse tel que le polyuréthanne ou d'autres matières de synthèse présentant des propriétés de souplesse et de résistance alliées à une certaine élasticité. Ces bandes transporteuses, montées sur un rouleau moteur et un rouleau de renvoi, éventuellement appuyées au long de leur parcours sur des galets ou des rouleaux de soutien, servent au transport de charbon, de minerais, de produits industriels en morceaux ou pulvérulents, et même au transport d'objets individualisés, par exemple des caisses en carton ou en bois, des bagages, etc. Cette énumération est loin d'être exhaustive, car les domaines d'emploi des bandes transporteuses sont très variés et ils s'en crée sans arrêt de nouveaux.

C'est pourquoi la dimension, la résistance et le matériau constitutif des bandes transporteuses sont extrêmement variés.

Deux procédés de jonctionnement sont connus jusqu'à présent. Le premier consiste à coller les extrémités de la bande transporteuse, ou à effectuer leur assemblage par vulcanisation. Les extrémités de la bande transporteuse sont préparées en vue de ces opérations de façon à ce que les surfaces à coller ou à vulcaniser ensemble soient coupées de manière précise et avec des étagements et rendues aptes a ces opérations de collage ou de vulcanisation. Ces collages et ces vulcanisations sont longs à réaliser, l'immobilisation de la bande transporteuse atteignant très souvent 24 heures. Ils présentent l'avantage de conserver presque complètement la souplesse et l'élasticité de la bande transporteuse dans la zone de jonctionnement. Ils sont souvent difficiles à réaliser par exemple dans des chantiers de carrières ou de construction ou dans des zones proches du front de taille, dans les mines en raison des conditions qui y règnent (exiguité, poussière, risque d'explosion, etc.) et de la difficulté qu'il y a pour préparer correctement les surfaces dans de telles conditions.

Le second procédé consiste à utiliser des agrafes métalliques, ou des barrettes d'agrafes métalliques, en forme de U, qui sont disposées sur les extrémités de la bande transporteuse, fixées sur celles-ci au moyen de crampons ou de rivets, rapprochées et imbriquées les unes dans les autres, une tige de liaison et d'articulation étant enfilée dans les agrafes imbriquées pour former un dispositif de jonctionnement articulé entre les extrémités de la bande transporteuse ainsi reliées. Ces dispositifs ont fait leurs preuves en particulier du fait de la rapidité d'exécution du jonctionnement, mais ils sont sujets à une usure trop rapide et ils doivent fréquemment être remplacés, souvent en urgence, en raison de l'usure de la tige de liaison et d'articulation, et même de l'arrachement d'au moins certaines des agrafes. Ces problèmes sont dus principalement à la rigidité inévitable de ces agrafes métalliques et à l'usure des tiges de liaison et d'articulation, causée par les déplacements relatifs en rotation des agrafes et de la tige de liaison et d'articulation provoqués par le déplacement même de la bande transporteuse.

La présente invention a pour objet de créer un dispositif de jonctionnement nouveau qui conserve les avantages de souplesse et d'élasticité des jonctionnements obtenus par collage ou vulcanisation directe des extrémités de la bande transporteuse, mais dont la mise en oeuvre soit beaucoup plus facile en particulier dans des conditions d'environnement hostile (mines, chantiers), et surtout beaucoup plus rapide que ces procédés de collage et de vulcanisation directe tout en étant au moins aussi sûrs et résistants à l'usure.

Le problème ainsi posé est résolu au moyen d'un dispositif de jonctionnement pour bandes transporteuses, en forme générale de profilé en H, dont la partie centrale, formant la barre de l'H du profilé, se prolonge par deux paires d'ailes formant les branches de l'H du profilé, lesdites ailes ayant dans le sens longitudinal une extension plusieurs fois plus importante que l'espace séparant deux ailes parallèles entre elles et situées d'un même côté de la partie centrale, ladite partie centrale, ainsi que les ailes étant réalisées en une matière souple et élastique dont la souplesse et l'élasticité sont voisines de celles de la matière dont sont constituées les bandes transporteuses auxquelles le dispositif de jonctionnement est destiné, comportant des moyens d'armature souples s'étendant dans les ailes et dans la partie centrale, ledit dispositif de jonctionnement étant caractérisé par le fait que les moyens d'armature autorisent un allongement permettant d'absorber, en liaison avec la matière constitutive, les tractions provoquées par la différence de parcours entre la face supérieure et la face inférieure du dispositif de jonctionnement, lors du passage de la bande transporteuse sur les rouleaux.

Les bords des ailes situés le plus à l'écart de la partie centrale sont avantageusement biseautés, le biseau présentant une pente partant de la surface extérieure de l'aile et rejoignant la partie non biseautée du bord de façon telle que la partie non biseautée soit d'une hauteur relativement faible.

Le dispositif de jonctionnement selon l'invention peut être réalisé soit par extrusion, en utilisant des procédés connus de mise en place de l'armature dans le cas où elle existe, le produit continu obtenu étant ensuite découpé en tronçons de longueur convenable pour pouvoir être adaptés à des bandes transporteuses de diverses largeurs, plusieurs tronçons pouvant être utilisés bout à bout pour obtenir une longueur de dispositif de jonctionnement correspondant à la largeur de la bande transporteuse. Le dispositif de jonctionnement peut également être réalisé par moulage, par calandrage ou par vulcanisation. La encore on connaît des procédés de maintien en place de l'armature au cours du moulage, dans le cas où le dispositif de jonctionnement selon l'invention comporte une telle armature.

Pour réaliser le jonctionnement des bandes transporteuses les extrémités de la bande transporteuse sont introduites dans l'espace situé entre deux ailes situées d'un même côté de la partie centrale du dispositif de jonctionnement, l'écart entre ces deux ailes étant, justement dans ce but, approximativement égal à l'épaisseur de la bande transporteuse. Les extrémités de la bande transporteuse étant ainsi chacune introduite entre deux ailes du dispositif de jonctionnement formant une des deux paires d'ailes situées sur les côtés opposés de la partie centrale du dispositif de jonctionnement, on réalise la fixation de chaque extrémité de la bande transporteuse avec les deux ailes entre lesquelles chaque extrémité est introduite. Cette fixation peut être obtenue par collage ou vulcanisation. Ce collage, ou cette vulcanisation, s'effectue surface contre surface (surface intérieure d'une aile contre la surface extérieure de la bande transporteuse, et surface intérieure de l'autre aile contre l'autre surface extérieure de la bande transporteuse. La réalisation de coupes parfaites, en biseau, ou avec des étagements, des extrémités de la bande transporteuse est très difficile dans un environnement hostile. Avec le dispositif de jonctionnement selon l'invention on coupe la bande transporteuse le plus droit possible, mais même s'il y a quelques irrégularités, celles-ci ne nuisent pas au collage ou à la vulcanisation qui s'effectuent sur des surfaces existantes, c'est-à-dire les surfaces intérieures des ailes et les surfaces extérieures de la bande transporteuse.

Le jonctionnement peut également être effectué au moyen de pointes ou de crampons qui traversent une aile, la bande transporteuse et l'autre aile, les extrémités pointues étant rabattues du côté où elles dépassent après ces opérations. On peut prévoir des rondelles ou des plaquettes incorporées dans les ailes, des trous traversant celles-ci pour le passage des pointes ou crampons. Ces rondelles ou plaquettes contribuent à la solidité et à la longévité de la fixation, en évitant la déchirure des ailes et/ou de la bande transporteuse par les tiges des pointes ou de crampons soumises à des tractions sévères lors du fonctionnement de la bande transporteuse dont le jonctionnement est effectué au moyen d'un dispositif de jonctionnement selon l'invention ainsi fixé sur la bande transporteuse.

La face extérieure des rondelles ou plaquettes présente avantageusement, par rapport à la face extérieure de l'aile un écart vers l'intérieur au moins égal à la hauteur de la tête des moyens de fixation à tige prévus.

Pour une plus grande solidité et une plus grande longévité de la fixation on peut également rendre les rondelles ou plaquettes solidaires, ou quasi solidaires, de l'armature des ailes, selon plusieurs modalités qui seront décrites plus loin en correspondance avec des exemples d'exécution et avec les dessins.

Les armatures peuvent être réalisées en divers matériaux résistants, souples et élastiques, leur souplesse étant voisine de la souplesse de la matière constitutive du dispositif de jonctionnement considéré et leur élasticité leur permettant d'absorber, en liaison avec la matière constitutive, les tractions inévitables au cours de fonctionnement de la bande transporteuse, en particulier lors du passage sur les rouleaux en raison de la différence de parcours de la face supérieure de la bande transporteuse par rapport au parcours de la face inférieure. Ces matériaux peuvent être par exemple un tissu, un tricot, un filet, un treillis, un non tissé, une feuille métallique ou une feuille de matière synthétique. Ils peuvent également consister en des câbles, en métal ou en matière synthétique, ces câbles présentant, si nécessaire, des sinuosités ou des formes en zig-zag de façon à les rendre aptes, en liaison avec la matière constitutive souple et élastique du dispositif de jonctionnement selon l'invention considéré, à se prêter élastiquement, mieux que le même câble disposé sans sinuosités ni zig-zags.

Ledit problème posé ci-avant est également résolu au moyen d'un procédé de mise en oeuvre du dispositif de jonctionnement précité, caractérisé par le fait qu'avant la mise en place des moyens de fixation à tige on fraise aux emplacements choisis par l'utilisateur pour la mise en place des moyens de fixation à tige des logements destinés à recevoir, soit des rondelles à trou traversant, puis on y met en place des rondelles à trou traversant et enfin on met en place les moyens de fixation à tige, les logements fraisés ayant une profondeur au moins égale à l'épaisseur des rondelles augmentée de la hauteur de la tête du moyen de fixation, soit les têtes de moyens de fixation à tige à tête ronde large.

L'invention va maintenant être décrite plus en détail, en relation avec des exemples de réalisations choisis à titre d'exemples non limitatifs illustrés par un dessin dans lequel :
- la figure 1 représente en coupe longitudinale un dispositif de jonctionnement selon l'invention, monté sur une bande transporteuse en train de passer sur un des rouleaux autour desquels est montée la bande transporteuse,
- la figure 2 représente en coupe longitudinale un dispositif de jonctionnement selon l'invention, du même type que celui de la figure 1, mais présenté à plat,
- la figure 3 représente en coupe longitudinale un dispositif de jonctionnement selon l'invention, dont l'armature et les moyens de fixation sont différents de l'armature et des moyens de fixation du précédent,
- les figures 4 et 5 représentent encore d'autres types de dispositifs de jonctionnement selon l'invention, également en coupe longitudinale, à plat montés sur les extrémités d'une bande transporteuse,
- les figures 6, 7 et 8 et 9 sont des vues en perspective de dispositifs de jonctionnement selon l'invention, nus, correspondant respectivement aux dispositifs de jonctionnement selon l'invention des figures 2, 3, 4 et 5.

Dans tout l'exposé, sens longitudinal et sens transversal signifient respectivement le sens de la longueur de la bande transporteuse et le sens de la largeur de celle-ci, même lorsque ces expressions sont appliquées au dispositif de jonctionnement et même lorsque celui-ci est nu, considéré comme s'il était déjà fixé sur la bande transporteuse.

Dans le même esprit, horizontal signifie sur une ligne, ou dans un plan, parallèle au plan contenant la face opérationnelle de la bande transporteuse, que celle-ci soit montée effectivement horizontalement ou obliquement ; vertical signifie perpendiculaire au plan contenant la face opérationnelle de la bande transporteuse.

Il faut remarquer que pour la clarté du dessin les ailes ont été dessinées avec une épaisseur volontairement supérieure à celle qu'impliquerait l'échelle, par rapport à l'épaisseur de la bande. Dans la réalité, ces ailes, généralement renforcées par une armature, sont beaucoup plus minces, sans que cela nuise à leur résistance lors du fonctionnement du dispositif.

Les références employées concernent les mêmes pièces, ou des pièces similaires, dans toutes les figures.

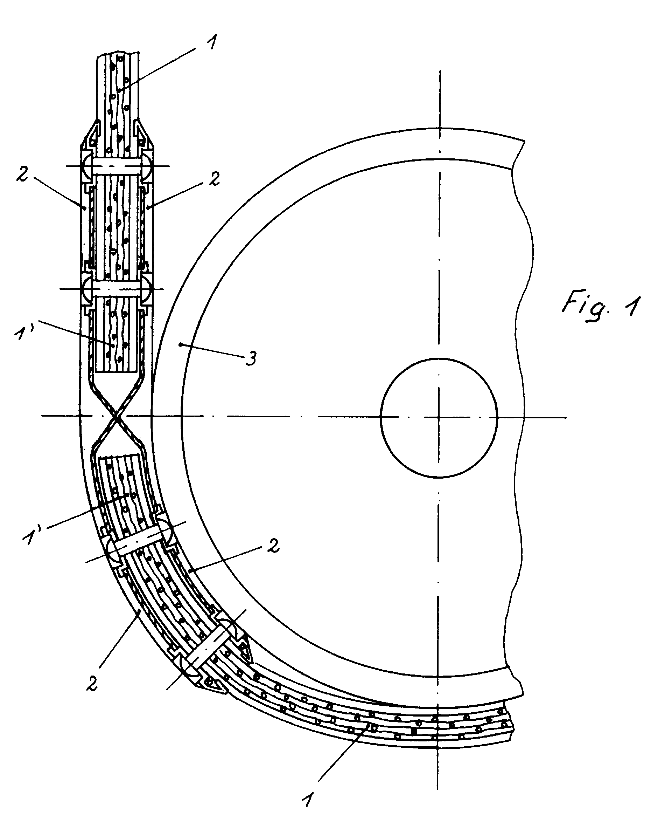

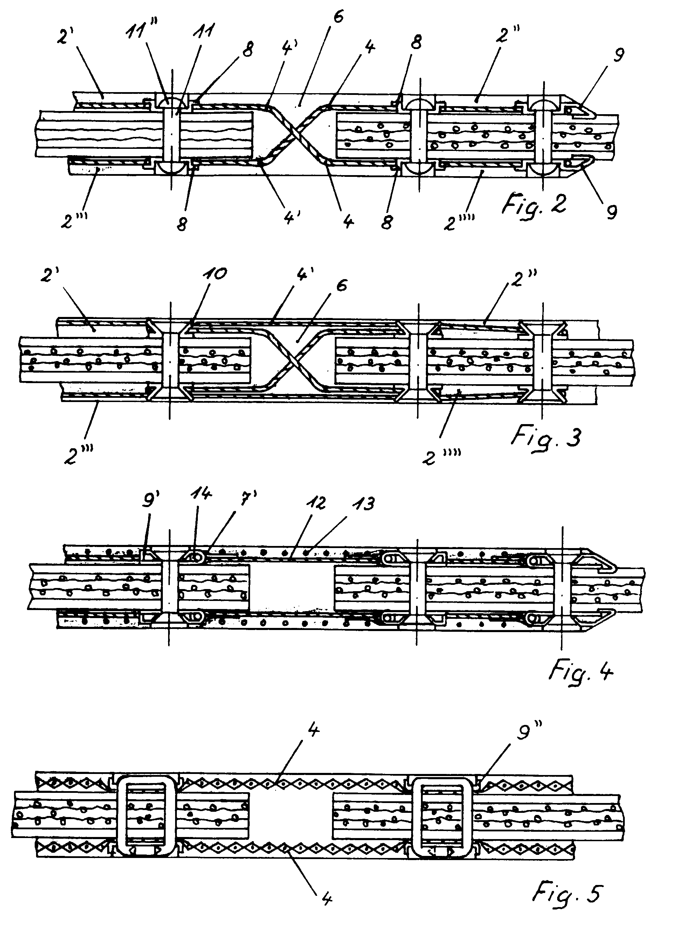

La figure 1 a pour but d'illustrer les qualités de souplesse du dispositif de jonctionnement selon l'invention, nécessaires au cours du fonctionnement de la bande transporteuse sur laquelle il est monté. On y reconnaît la bande transporteuse 1, les extrémités 1' de celle-ci engagées entre les ailes 2, la bande passant sur un rouleau 3. Le dispositif de jonctionnement selon l'invention représenté comporte une armature et des rondelles de fixation qui seront décrites plus en détail en relation avec la figure 2.

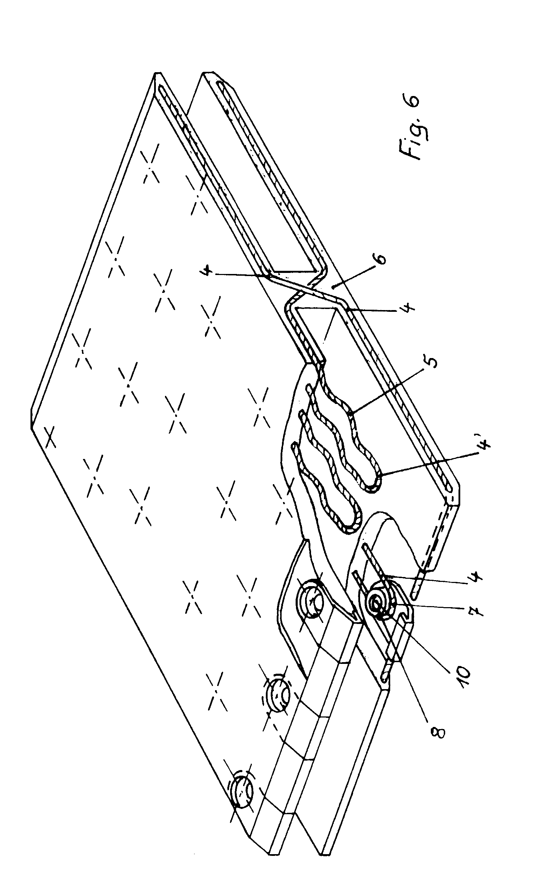

La figure 2 représente le dispositif de jonctionnement selon l'invention de la figure 1, presenté cette fois à plat. L'armature 4 est constituée par des câbles 4' que l'on peut également observer autrement dans la vue en perspective du même dispositif de jonctionnement, de la figure 6, qui comporte un écorché permettant de voir l'armature. Ces câbles 4' s'étendent dans une aile 2' ou 2'", ils peuvent présenter des sinuosités 5 que l'on observe sur l'écorché de la figure 6, puis ils traversent la partie centrale 6 où ils passent obliquement en changeant de plan pour s'étendre ensuite dans une aile 2"", ou 2", située du côté opposé et dans un plan différent de celui de l'aile précédente 2', ou 2'", ils forment une boucle d'arrimage 7 autour d'une rondelle 8, ou d'une plaquette 9 et repartent dans le sens opposé pour traverser à nouveau obliquement la partie centrale 6 et ainsi de suite. Les rondelles 8, ou les plaquettes 9 comportent un ou des trous 10 qui servent au passage des moyens de fixation à tige 11 qui peuvent consister en des pointes 11', des rivets 11", des crampons 11'", des vis et des écrous 11"", servant à la fixation des ailes sur l'extrémité correspondante de la bande transporteuse. On comprendra que le dispositif de jonctionnement selon l'invention représenté est à la fois très souple, du fait de la souplesse de ses constituants, très résistant, du fait de la présence de l'armature, tout en présentant l'élasticité souhaitable, et que donc il ne se déchire pas malgré les efforts de traction appliqués aux ailes lors du fonctionnement, par les tiges traversantes des moyens de fixation 11, en raison de la présence des rondelles 8, ou des plaquettes 9 et de leur arrimage à l'armature 4.

On peut caractériser la configuration de l'armature selon les figures 2 et 6 en parlant d'une armature "en X".

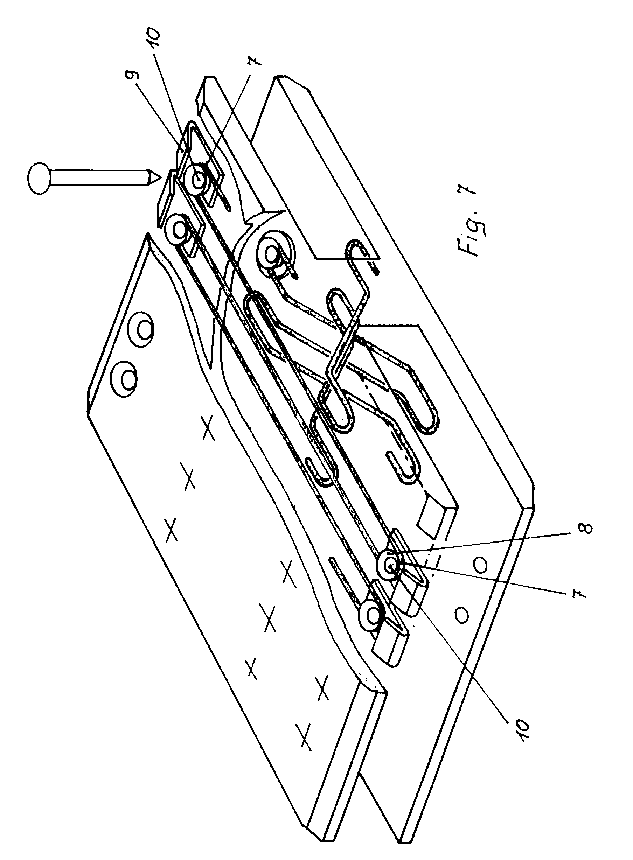

Sur la figure 3 est représenté un autre dispositif de jonctionnement selon l'invention que l'on peut également voir en perspective sur la figure 7 dont une partie est en écorché pour permettre de voir la configuration de l'armature. Le dispositif de jonctionnement selon l'invention représenté comporte une armature du même type général que celui de la figure 2, avec la différence qu'il y a en plus de l'armature "en X", deux nappes d'armature supplémentaires, également constituées par des câbles 4', qui traversent la partie centrale 6 en restant dans le même plan en passant d'une aile 2' ou 2'" à l'autre aile 2", ou respectivement 2"", située dans le même plan de l'autre côté de la partie centrale, le câble formant des boucles d'arrimage successivement dans une aile puis dans l'aile opposée autour de rondelles ou plaquettes implantées dans les ailes, ces deux nappes supplémentaires étant incorporées dans le dispositif de jonctionnement plus vers l'extérieur que les deux nappes d'armature "en X".

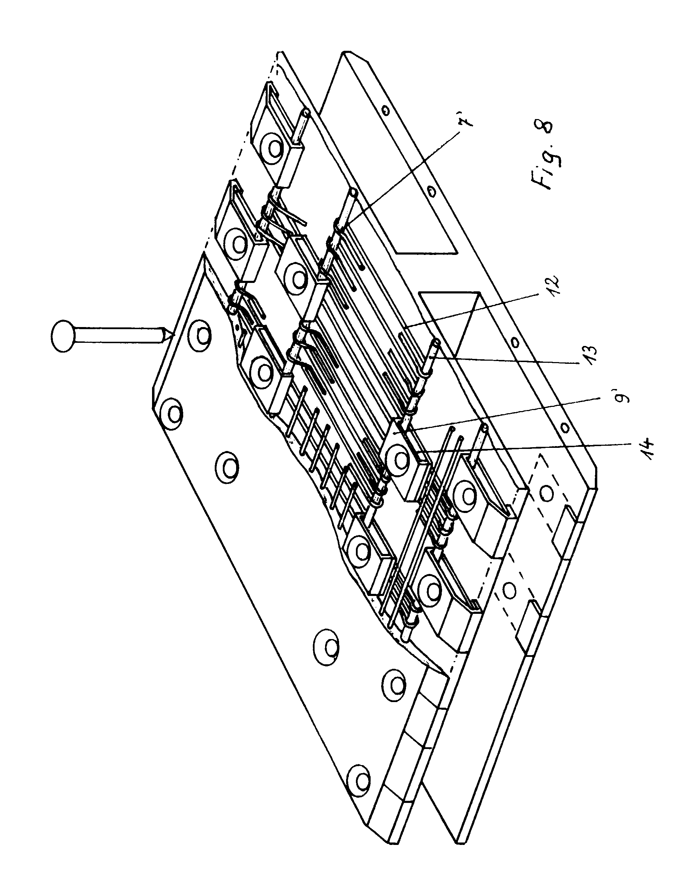

Sur la figure 4 est représenté encore un autre dispositif de jonctionnement selon l'invention dans lequel l'armature, encore constituée par des câbles, que l'on peut également voir sur la figure 8 en perspective comportant une partie en écorché, ne présente pas de partie "en X" comme dans le cas des dispositifs de jonctionnement selon l'invention des figures 2 et 3, mais seulement des câbles disposés en deux nappes, une nappe reliant une aile à l'aile opposée située de l'autre côté de la partie centrale dans le même plan, et l'autre nappe reliant les deux autres ailes opposées, en restant dans le même plan. La disposition des câbles d'armature est tout à fait différente de celle des armatures décrites précédement. En effet dans ce cas il s'agit de câbles de courte longueur, ne formant pas chacun des boucles d'arrimage successives dans une aile puis dans l'aile opposée et ainsi de suite. Ces câbles de courte longueur appelés plus loin câbles de liaison 12 s'étendent d'une aile à l'autre en traversant la partie centrale mais l'arrimage des plaquettes est obtenu par l'intermédiaire de câbles de renfort 13 disposés dans le sens tranversal (alors que les câbles de liaison 12 sont disposés dans le sens longitudinal), tranversal et longitudinal étant compris comme défini plus haut, ces câbles de renfort 13 disposés dans le sens transversal passant dans des trous traversants 14 ménagés dans les plaquettes 9', les câbles de liaison 12 étant repliés autour des câbles de renfort 13 en formant des boucles d'arrimage 7', le brin libre 15 de la boucle ainsi formée étant noyé dans la matière en étant disposé le long de l'autre brin sur une certaine longueur.

On comprendra que pour la clarté du dessin on a représenté des câbles de liaison 12 et des câbles de renfort 13 bien écartés, mais dans la réalité ils sont très proches, allant dans certains cas jusqu'à se toucher.

En dehors de leur fonction d'arrimage des plaquettes en conjugaison avec les câbles de liaison 12 dont les extrémités sont repliées autour d'eux, les câbles de renfort 13 ont d'autres fonctions, à savoir :
- ils maintiennent les boucles d'arrimage des fils de liaison à plat, en les empêchant de se soulever,
- ils augmentent l'adhérence par pontage des câbles de liaison dans la matière (et en créant une contre-pression au moment du passage du dispositif de jonctionnement selon l'invention sur les rouleaux du convoyeur),
- ils maintiennent l'écartement des plaquettes dans le sens longitudinal,
- ils assurent la dimension transversale du dispositif de jonctionnement.

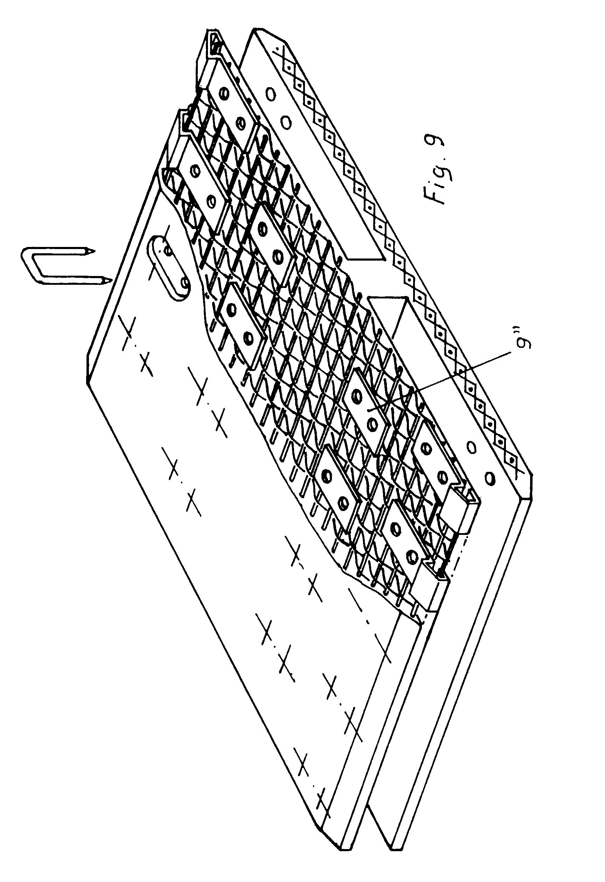

La figure 5 représente un dispositif de jonctionnement selon l'invention dans lequel l'armature est du type tissé, le même dispositif de jonctionnement selon l'invention étant représenté en perspective, partiellement en écorché sur la figure 9.

Le dessin général de l'armature en tissu vu en coupe longitudinale est le même que celui du dispositif de jonctionnement selon l'invention, l'armature étant constituée par deux nappes indépendantes l'une de l'autre, parallèles entre elles, qui relient chacune des deux ailes opposées en traversant la partie centrale.

On remarque des plaquettes 9" qui, dans ce cas sont percées de deux trous, la fixation s'opérant au moyen de crampons à deux pointes. L'arrimage de ces plaquettes est obtenu par serrage, ou friction des plaquettes contre le tissu d'armature, l'armature elle même n'étant pas positivement arrimée aux plaquettes. Le tissu peut avantageusement être tissé avec embubage de façon à permettre une certaine élasticité, en liaison avec la matière constitutive du dispositif de jonctionnement, les fils utilisés pour le tissage étant en eux mêmes très peu élastiques.

On aura remarqué que dans les deux figures les plaquettes implantées dans la partie des ailes formant le bord situé le plus à l'écart de la partie centrale dans le sens longitudinal le sont de façon telle que l'un des bords des plaquettes ayant une forme biseautée soit dans l'alignement du bord biseauté de l'aile considérée.

Il doit être entendu que dans tous les exemples présentés il n'y a pas de mode de fixation privilégié, et encore moins de mode de fixation imposé. Les rondelles trouées peuvent être remplacées par des plaquettes, à un ou deux trous, les moyens de fixation peuvent être choisis à volonté quelconques pourvu qu'ils comportent une tige qui traverse les trous et la bande transporteuse ; c'est ainsi qu'on peut indifféremment employer des rivets, des vis et écrous, des pointes rabattues, des crampons à deux pointes rabattues, ou des moyens similaires.

Il faut aussi rappeler que les dispositifs de jonctionnement selon l'invention peuvent également être fixés par collage ou par vulcanisation. Dans ce cas, les armatures présentées sur les figures peuvent être utilisées sans la présence des rondelles, ou des plaquettes et évidemment sans arrimage sur celles-ci. Cependant il va de soi que les conformations spéciales d'armature, destinées à l'arrimage, deviennent inutiles même si l'on peut utiliser les armatures représentées avec des plaquettes ou des rondelles, sans que ces plaquettes ou rondelles soient présentes. Mais il est évident que plus la disposition adoptée en vue de l'arrimage est compliquée, moins son utilisation, sans rondelles ou plaquettes, même si elle est réalisable, est justifiée sur un plan économique. Enfin, il faut rappeler, qu'en particulier dans le cas des dispositifs de jonctionnement réalisés par extrusion ou calandrage d'un profilé qui est ensuite tronçonné, on peut avantageusement employer des matières plastiques ou des caoutchoucs armés de fibres coupées, pour les dispositifs de jonctionnement selon l'invention destinés à des applications dans lesquelles la résistance exigée n'impose pas la présence d'armatures structurées. Cependant on peut également utiliser des matières plastiques, des caoutchoucs, "animés" de fibres coupées dans le cas où, au lieu de l'extrusion, l'on utilise une technique de moulage pour la réalisation de dispositifs de jonctionnement selon l'invention individualisés. Les armatures représentées sont constituées par des nappes de câbles ou des tissus. Cependant on peut également utiliser des armatures formant des voiles pleins dont la forme, vue en coupe est identique à celle des armatures représentées. Ces armatures sont, dans le cas de la fabrication par extrusion, des profilés de grande longueur qui sont introduits dans la filière et qui se trouvent ainsi logés dans la masse de matière extrudée. Les procédés permettant de caler ces profilés correctement à leur place dans le produit extrudé sont connus et n'ont pas besoin d'être décrits ici.

De même des armatures formant des voiles pleins présentant les mêmes formes vues en coupe transversale, de dimension limitée, soit parce qu'il s'agit de tronçons d'armature découpés à partir d'un profilé extrudé, soit parce qu'il s'agit des pièces moulées individuellement, peuvent être introduites dans des moules, calées dans ceux-ci par des procédés connus qu'il n'est pas nécessaire de décrire ici, le moulage, ou la vulcanisation de la matière s'effectuant autour desdites armatures.

Les voiles d'armature pleins peuvent comporter des trous pratiqués à l'avance, en vue du passage de moyens de fixation traversant les ailes et l'extrémité de la bande transporteuse.

Cependant dans certaines applications, afin de disposer d'un produit universel, on préférera fournir un dispositif de jonctionnement selon l'invention dont les ailes, et l'armature ne comporteront au départ pas de trous dans les ailes (ni dans l'armature) : un tel produit pourra être fixé tel quel par collage ou vulcanisation ; selon une deuxième version d'utilisation, il pourra être muni de trous selon un dessin choisi à volonté par l'utilisateur, par exemple par des percements effectués de préférence avec un gabarit de perçage, et dans une troisième version d'utilisation il pourra être muni de rondelles ou de plaquettes qui seront logées, avant la mise en place des moyens de fixation traversants, dans des cavités réalisées par perçage, ou par fraisage, de la matière constitutive des ailes et dotées d'une profondeur correspondant à l'épaisseur des rondelles ou plaquettes.

Cette troisième version d'utilisation est particulièrement envisageable dans le cas où l'armature est constituée par un tissu (comme dans le dispositif de jonctionnement selon l'invention des figures 5 et 9) ou dans le cas où l'armature est constituée par un voile plein, non représentée. Dans tous ces cas, les rondelles, ou plaquettes, peuvent, lors de la mise en place des moyens de fixation, être avantageusement comprimées contre l'armature par ceux-ci, afin de pincer cette dernière et d'obtenir un arrimage des rondelles à l'armature, grâce à un effet de friction. On peut également se passer de rondelles tout en obtenant le même effet que celui qu'elles procurent, c'est-à-dire le renforcement du passage des tiges des moyens de fixation et le serrage sur l'armature, direct ou à travers une mince épaisseur de matière du dispositif de jonctionnement selon l'invention, en utilisant des vis munies de têtes de fort diamètre et ayant une forme approchant celle des rondelles, susceptibles de se loger dans les trous fraisés pratiqués comme expliqué plus haut dans le cas des rondelles.

Enfin on peut bien entendu effectuer la fixation des dispositifs de jonctionnement selon l'invention sur les extrémités de la bande transporteuse en combinant le collage, ou la vulcanisation, déjà décrits, avec la fixation grâce à des moyens de fixation à tige, comme déjà expliqué. Dans ce cas le nombre des moyens de fixation à tige peut être moins élevé que si l'on utilise de tels moyens de fixation seuls, et la remise en route de la bande transporteuse pourra éventuellement être effectuée plus tôt que s'il y avait seulement un collage, ou une vulcanisation.

Le terme de câble est employé dans tout l'exposé de façon générique, il s'applique aussi bien à des fils câblés ou retors textiles, qu'à des câbles métalliques à plusieurs brins torsadés et même qu'à des monofilaments de matière plastique. Ils sont avantageusement du type employé dans l'industrie du caoutchouc ou dans l'industrie des matières plastiques, et ils sont dotés de bonnes qualités d'adhérence dans les matières moulées vulcanisées, ou extrudées.

Il faut également comprendre qu'une des caractéristiques essentielles des dispositifs de jonctionnement selon l'invention réside dans la grande extension des ailes dans le sens longitudinal, qui est autorisée par la souplesse de celles-ci, et qui permet soit de placer un grand nombre de moyens de fixation traversants, en fait un plus grand nombre, si nécessaire, que dans les quelques exemples représentés, soit de disposer de surfaces de collage, ou de vulcanisation, importantes, des deux côtés de la bande transporteuse, en procurant ainsi une excellente fixation. Du fait que la souplesse et l'élasticité des dispositifs de jonctionnement selon l'invention sont égales, à celles de la bande transporteuse, ou au moins voisines, les ailes, malgré leur grande extension, se prêtent à toutes les déformations temporaires que subit la bande transporteuse au cours de son fonctionnement.

## Revendications

1. Dispositif de jonctionnement pour bandes transporteuses (1), en forme générale de profilé en H, dont la partie centrale (6) , formant la barre de l'H du profil, se prolonge par deux paires d'ailes (2) formant les branches de l'H du profil, lesdites ailes(2) ayant dans le sens longitudinal une extension plusieurs fois plus importante que l'espace séparant deux ailes (2) parallèles entre elles et situées d'un même côté de la partie centrale, ladite partie centrale (6), ainsi que les ailes (2) étant réalisées en une matière souple et élastique dont la souplesse et l'élasticité sont voisines de celles de la matière dont sont constituées les bandes transporteuses auxquelles le dispositif de jonctionnement est destiné, comportant des moyens d'armature souples s'étendant dans les ailes et dans la partie centrale, caractérisé par le fait les moyens d'armature (4) autorisent un allongement permettant d'absorber, en liaison avec la matière constitutive, les tractions provoquées par la différence de parcours entre la face supérieure et la face inférieure du dispositif de jonctionnement, lors du passage de la bande transporteuse (1) sur les rouleaux.

2. Dispositif de jonctionnement selon la revendication 1, caractérisé par le fait que les moyens d'armature (4) présentent en eux-mêmes une élasticité autorisant un allongement permettant d'absorber, en liaison avec la matière constitutive, les tractions provoquées par la différence de parcours entre la face supérieure et la face inférieure du dispositif de jonctionnement, lors du passage de la bande transporteuse (2) sur les rouleaux.

3. Dispositif de jonctionnement selon la revendication 1, caractérisé par le fait que les moyens d'armature (4) sont agencés de façon à se prêter dans le sens longitudinal jusqu'à une certaine limite en présence de forces s'exerçant dans le sens longitudinal, en étant ramenés à leur dimension initiale par la matière élastique constitutive du dispositif de jonctionnement lorsque ces forces décroissent.

4. Dispositif de jonctionnement selon la revendication 3, caractérisé par le fait que le tissu constituant l'armature (4) est tissé avec embubage.

5. Dispositif de jonctionnement selon la revendication 3, caractérisé par le fait que l'armature (4) est constituée par des câbles très peu extensibles en eux-mêmes, mais présentant des zigzags noyés dans la matière constitutive du dispositif de jonctionnement.

6. Dispositif de jonctionnement selon la revendication 3, caractérisé par le fait que l'armature (4) est constituée par des câbles très peu extensibles en eux-mêmes, mais présentant des sinuosités noyées dans la matière constitutive du dispositif de jonctionnement.

7. Dispositif de jonctionnement selon l'une quelconque des revendications précédentes, caractérisé par le fait que les moyens d'armature (4) sont disposés sous forme de deux nappes dont chacune est incorporée dans deux ailes (2) opposées disposées de part et d'autre de la partie centrale (6), chaque nappe d'armature traversant la partie centrale (6) du dispositif de jonctionnement en reliant les parties de la nappe d'armature incorporée dans les ailes, tout en restant dans le même plan que celles-ci.

8. Dispositif de jonctionnement selon la revendication 7, caractérisé par le fait que les moyens d'armature comportent en outre deux nappes supplémentaires incorporées chacune dans deux ailes (2) respectives situées chacune dans un plan différent, de part et d'autre de la partie centrale (6) du dispositif de jonctionnement, les parties centrales des deux dites nappes reliant les parties incorporées dans les ailes en traversant obliquement la partie centrale (6) du dispositif de jonctionnement en s'y croisant, les nappes supplémentaires étant situées plus vers l'intérieur que les autres nappes.

9. Dispositif de jonctionnement selon l'une quelconque des revendications précédentes, comportant des rondelles (8), ou plaquettes (9) percées, de renfort qui sont noyées dans les ailes (2) des dispositifs de jonctionnement de façon à ce que leurs trous soient en alignement avec les trous (10) pratiqués dans les ailes, caractérisé en ce que les armatures (4) sont arrimées aux rondelles (8) ou plaquettes (9).

10. Dispositif de jonctionnement selon la revendication 9, dont l'armature (4) est constituée par des câbles, caractérisé en ce que chaque rondelle (8) est entourée sur environ 180° par une boucle de câble d'armature.

11. Dispositif de jonctionnement selon la revendication 9 ou 10, caractérisé en ce que la face des rondelles (8) ou plaquettes (9) orientée vers l'extérieur présente, par rapport à la face extérieure correspondante de l'aile considérée, un écart vers l'intérieur au moins égal à la hauteur de la tête des moyens de fixation à tige (11) prévus pour la fixation.

12. Dispositif de jonctionnement selon l'une quelconque des revendications précédentes dont les bords des ailes (2) situés le plus à l'écart de la partie centrale (6) dans le sens longitudinal sont biseautés, le biseau présentant une pente partant de la surface extérieure et rejoignant la partie non biseautée du bord de façon telle que la partie non biseautée soit d'une hauteur relativement faible, caractérisé par le fait que des plaquettes sont implantées dans la partie des ailes formant le bord situé le plus à l'écart de la partie centrale dans le sens longitudinal, de façon telle que l'un des bords de la plaquette ait une forme biseautée et soit dans l'alignement du bord biseauté de l'aile considérée.

13. Dispositif de jonctionnement selon la revendication 12, caractérisé par le fait que l'armature est arrimée aux plaquettes biseautées.

14. Dispositif de jonctionnement selon la revendication 9 caractérisé par le fait que les câbles formant l'armature (4) sont disposés en deux nappes, une nappe reliant une aile à l'aile opposée située de l'autre côté de la partie centrale dans le même plan, et l'autre nappe reliant les deux autres ailes opposées, en restant dans le même plan, des câbles de courte longueur appelés câbles de liaison (12) disposés dans le sens longitudinal s'étendant, d'une aile à l'autre en traversant la partie centrale du dispositif de jonctionnement, des plaquettes (9) étant arrimées par l'intermédiaire de câbles de renfort (13) disposés dans le sens transversal, ces câbles de renfort (13) passant dans des trous traversants ménagés dans les plaquettes (9), les câbles de liaison (12) étant repliés autour de câbles de renfort (13) en formant des boucles d'arrimage, le brin libre (15) de la bouclé ainsi formée se trouvant noyé dans la matière en étant disposé le long de l'autre brin sur une certaine longueur.

15. Procédé de mise en oeuvre d'un dispositif de jonctionnement selon l'une des revendications précédentes, caractérisé par le fait qu'avant la mise en place des moyens de fixation à tige (11) on fraise aux emplacements choisis par l'utilisateur pour la mise en place des moyens de fixation à tige (11) des logements destinés à recevoir des rondelles à trou traversant, puis on y met en place des rondelles (8) à trou traversant et enfin on met en place les moyens de fixation à tige, les logements fraisés ayant une profondeur au moins égale à l'épaisseur des rondelles (8) augmentée de la hauteur de la tête du moyen de fixation.

16. Procédé de mise en oeuvre d'un dispositif de jonctionnement selon l'une des revendications 1 à 8 comprise, caractérisé par le fait qu'avant la mise en place des moyens de fixation à tige (11) on fraise aux emplacements choisis par l'utilisateur pour la mise en place des moyens de fixation à tige (11) des logements destinés à recevoir les têtes de moyens de fixation à tige (11) à tête ronde large.

17. Procédé de mise en oeuvre d'un dispositif de jonctionnement selon la revendication 15 ou 16, caractérisé par le fait que lors de la mise en place des moyens de fixation à tige (11) les rondelles (8), ou plaquettes (9), ou les têtes larges de moyens de fixation à tige (11) sont pincées suffisamment énergiquement en direction de l'armature pour que lesdites rondelles (8), plaquettes (9) ou têtes larges de moyens de fixation à tige (11) soient arrimées par friction contre l'armature.

18. Procédé de mise en oeuvre d'un dispositif de jonctionnement selon la revendication 15 ou 16, caractérisé par le fait qu'une certaine quantité de matière constitutive du dispositif de jonctionnement subsistant en couche mince entre l'armature et les rondelles(8), plaquettes (9) ou têtes larges de moyens de fixation à tige (11), ces dernières sont pincées suffisamment énergiquement contre cette couche mince de matière solidaire de l'armature pour arrimer par friction lesdites rondelles, plaquettes ou têtes de moyens de fixation à tige à l'ensemble constitué par ladite couche mince de matière et l'armature (4).

19. Procédé de mise en oeuvre d'un dispositif de jonctionnement selon l'une des revendications 15 à 18, caractérisé par le fait que l'on combine une fixation par collage, ou par vulcanisation, avec une fixation par moyens de fixation à tige (11).

## Patentansprüche

1. Verbindungsvorrichtung für Förderbänder (1) allgemein in Form eines H-Profils, dessen zentraler Teil (6), der den Balken des H des Profils bildet, durch zwei Paare von Flügeln (2) verlängert ist, die die Schenkel des H des Profils bilden, wobei die Flügel (2) in Längsrichtung eine mehrere Male größere Ausdehnung als der Raum aufweisen, der zwei Flügel (2) trennt, die zueinander parallel sind und an der gleichen Seite des zentralen Teils liegen, wobei der zentrale Teil (6) sowie die Flügel (2) aus einem nachgiebigen und elastischen Material hergestellt sind, dessen Nachgiebigkeit und Elastizität nahezu gleich denjenigen des Materials sind, aus denen die Förderbänder bestehen, für die die Verbindungsvorrichtung bestimmt ist, mit nachgiebigen Bewehrungsmitteln, die sich in den Flügeln und in dem zentralen Teil erstrecken, dadurch gekennzeichnet, daß die Bewehrungsmittel (4) eine Dehnung zulassen, die es ermöglicht, in Verbindung mit dem Grundmaterial die Zugkräfte zu absorbieren, die durch die Laufdifferenz zwischen der Oberseite und der Unterseite der Verbindungsvorrichtung beim Vorbeilaufen des Förderbandes (1) an den Walzen hervorgerufen werden.

2. Verbindungsvorrichtung nach Anspruch 1, dadurch gekennzeichnet, daß die Bewehrungsmittel (4) in sich selbst eine Elastizität aufweisen, die eine Dehnung zuläßt, die es ermöglicht, in Verbindung mit dem Grundmaterial die Zugkräfte zu absorbieren, die durch die Laufdifferenz zwischen der Oberseite und der Unterseite der Verbindungsvorrichtung beim Vorbeilaufen des Förderbandes (1) an den Walzen hervorgerufen werden.

3. Verbindungsvorrichtung nach Anspruch 1, dadurch gekennzeichnet, daß die Bewehrungsmittel (4) derart angeordnet sind, daß sie sich in Längsrichtung bis zu einer bestimmten Grenze in Gegenwart von Kräften dehnen, die in Längsrichtung ausgeübt werden, wobei sie durch das elastische Grundmaterial der Verbindungsvorrichtung in ihre Ausgangsabmessung zurückgeführt werden, wenn diese Kräfte abnehmen.

4. Verbindungsvorrichtung nach Anspruch 3, dadurch gekennzeichnet, daß das die Bewehrung (4) bildende Gewebe derart gewebt ist, daß der Schuß loser als die Kette liegt.

5. Verbindungsvorrichtung nach Anspruch 3, dadurch gekennzeichnet, daß die Bewehrung (4) durch in sich selbst sehr wenig dehnbare Kabel gebildet ist, die aber zickzackförmige Strukturen aufweisen, die in das Grundmaterial der Verbindungsvorrichtung eingebettet sind.

6. Verbindungsvorrichtung nach Anspruch 3, dadurch gekennzeichnet, daß die Bewehrung (4) durch in sich selbst sehr wenig dehnbare Kabel gebildet ist, die aber Krümmungen aufweisen, die in das Grundmaterial der Verbindungsvorrichtung eingebettet sind.

7. Verbindungsvorrichtung nach einem der vorhergehenden Ansprüche, dadurch gekennzeichnet, daß die Bewehrungsmittel (4) in Form von zwei Lagen angeordnet sind, von denen jede in zwei gegenüberliegende Flügel (2) eingebettet ist, die beiderseits des zentralen Teils (6) angeordnet sind, wobei jede Bewehrungslage den zentralen Teil (6) der Verbindungsvorrichtung durchsetzt, indem sie die Teile der in die Flügel eingebetteten Bewehrungslage verbindet, wobei sie gleichzeitig in der gleichen Ebene wie diese bleibt.

8. Verbindungsvorrichtung nach Anspruch 7, dadurch gekennzeichnet, daß die Bewehrungsmittel ferner zwei zusätzliche Lagen aufweisen, die jeweils in zwei entsprechende Flügel (2) eingebettet sind, die in einer unterschiedlichen Ebene liegen, und zwar beiderseits des zentralen Teils (6) der Verbindungsvorrichtung, wobei die zentralen Teile der beiden Lagen die in die Flügel eingebetteten Teile verbinden, indem sie den zentralen Teil (6) der Verbindungsvorrichtung sich kreuzend schräg durchsetzen, wobei die zusätzlichen Lagen mehr nach innen als die anderen Lagen liegen.

9. Verbindungsvorrichtung nach einem der vorhergehenden Ansprüche mit Scheiben (8) oder durchbohrten Plättchen (9) zur Verstärkung, die in die Flügel (2) der Verbindungsvorrichtungen derart eingebettet sind, daß ihre Löcher mit den in den Flügeln vorgesehenen Löchern (10) ausgerichtet sind, dadurch gekennzeichnet, daß die Bewehrungen (4) an den Scheiben (8) oder Plättchen (9) befestigt sind.

10. Verbindungsvorrichtung nach Anspruch 9, deren Bewehrung (4) durch Kabel gebildet ist, dadurch gekennzeichnet, daß jede Scheibe (8) über etwa 180° von einer Bewehrungskabelschleife umgeben ist.

11. Verbindungsvorrichtung nach Anspruch 9 oder 10, dadurch gekennzeichnet, daß die nach außen gerichtete Seite der Scheiben (8) oder Plättchen (9) bezüglich der entsprechenden Außenseite des betrachteten Flügels einen nach innen gerichteten Versatz aufweist, der wenigstens gleich der Höhe des Kopfs der zur Befestigung vorgesehenen Stiftbefestigungsmittel (11) ist.

12. Verbindungsvorrichtung nach einem der vorhergehenden Ansprüche, deren Ränder der Flügel (2), die in Längsrichtung am weitesten von dem zentralen Teil (6) versetzt sind, abgeschrägt sind, wobei die Abschrägung eine Steigung aufweist, die von der Außenfläche ausgehet und an den nichtabgeschrägten Teil des Randes derart anschließt, daß der nichtabgeschrägte Teil eine relativ geringe Höhe aufweist, dadurch gekennzeichnet, daß Plättchen in den Teil der Flügel eingesetzt sind, der den Rand bildet, der in Längsrichtung am weitesten von dem zentralen Teil versetzt ist, so daß einer der Ränder des Plättchens eine abgeschrägte Form aufweist und mit dem abgeschrägten Rand des betrachteten Flügels ausgerichtet ist.

13. Verbindungsvorrichtung nach Anspruch 12, dadurch gekennzeichnet, daß die Bewehrung an den abgeschrägten Plättchen befestigt ist.

14. Verbindungsvorrichtung nach Anspruch 9, dadurch gekennzeichnet, daß die die Bewehrung (4) bildenden Kabel in zwei Lagen angeordnet sind, wobei eine Lage einen Flügel mit dem gegenüberliegenden Flügel verbindet, der an der anderen Seite des zentralen Teils in der gleichen Ebene liegt, und die andere Lage, in der gleichen Ebene bleibend, die beiden anderen, gegenüberliegenden Flügel verbindet, und Kabel mit kurzer Länge, die Verbindungskabel (12) heißen und in Längsrichtung sich von einem Flügel zum anderen erstreckend angeordnet sind, wobei sie den zentralen Teil der Verbindungsvorrichtung durchsetzen, wobei Plättchen (9) über Verstärkungskabel (13) befestigt sind, die in Querrichtung angeordnet sind und in Durchgangslöchern verlaufen, die in den Plättchen (9) vorgesehen sind, wobei die Verbindungskabel (12) um Verstärkungskabel (13) gebogen sind, indem sie Befestigungsschlaufen bilden, und wobei der freie Strang (15) der so gebildeten Schlaufe in dem Material eingebettet ist, wobei er über eine bestimmte Länge längs des anderen Strangs angeordnet ist.

15. Verfahren zur Ausführung einer Verbindungsvorrichtung nach einem der vorhergehenden Ansprüche, dadurch gekennzeichnet, daß vor dem Einsetzen der Stiftbefestigungsmittel (11) an von dem Benutzer zum Einsetzen der Stiftbefestigungsmittel (11) gewählten Stellen Aufnahmen gefräst werden, die zur Aufnahme der Scheiben mit Durchgangsloch bestimmt sind, daß dann Scheiben (8) mit Durchgangsloch eingesetzt werden und schließlich die Stiftbefestigungsmittel eingesetzt werden, wobei die gefrästen Aufnahmen eine Tiefe aufweisen, die wenigstens gleich der Dicke der Scheiben (8) plus der Höhe des Kopfes des Befestigungsmittels ist.

16. Verfahren zur Ausführung einer Verbindungsvorrichtung nach einem der Anspruche 1 bis einschiießlich 8, dadurch gekennzeichnet, daß vor dem Einsetzen der Stiftbefestigungsmittel (11) an von dem Benutzer zum Einsetzen der Stiftbefestigungsmittel (11) gewählten Stellen Aufnahmen gefräst werden, die zur Aufnahme der Köpfe von Stiftbefestigungsmitteln (11) mit großem Halbrundkopf bestimmt sind.

17. Verfahren zur Ausführung einer Verbindungsvorrichtung nach Anspruch 15 oder 16, dadurch gekennzeichnet, daß die Scheiben (8) oder Plättchen (9) oder die großen Köpfe von Stiftbefestigungsmitteln (11) beim Einsetzen der Stiftbefestigungsmittel (11) ausreichend stark in Richtung der Bewehrung gequetscht werden, damit die Scheiben (8), Plättchen (9) oder die Rundköpfe von Stiftbefestigungsmitteln (11) durch Reibung gegen die Bewehrung befestigt sind.

18. Verfahren zur Ausführung einer Verbindungsvorrichtung nach Anspruch 15 oder 16, dadurch gekennzeichnet, daß eine bestimmte Menge des Grundmaterials der Verbindungsvorrichtung als dünne Schicht zwischen der Bewehrung und den Scheiben (8), Plättchen (9) oder Rundköpfen von Stiftbefestigungsmitteln (11) vorliegt und diese deshalb ausreichend stark gegen diese mit der Bewehrung fest verbundene dünne Materialschicht gequetscht werden, um die Scheiben, Plättchen oder Köpfe von Stiftbefestigungsmitteln durch Reibung an der Einheit zu befestigen, die durch die dünne Materialschicht und die Bewehrung (4) gebildet ist.

19. Verfahren zur Ausführung einer Verbindungsvorrichtung nach einem der Ansprüche 15 bis 18 dadurch gekennzeichnet, daß eine Befestigung durch Verklebung oder Vulkanisierung mit einer Befestigung durch Stiftbefestigungsmittel (11) kombiniert wird.

## Claims

1. Joining device for conveyor belts (1) having generally an H profile shape, the central part (6) of which, corresponding to the bar of the H profile, is exteniied by two pairs of arms (2) forming the branches of the H of the profile, the said arms (2) having in the longitudinal direction an extension several times larger than the space between the two parallel arms (2) and located on one same side of the central part, the said central part (6) as well as the arms (2) being made up of a flexible and elastic material, the flexibility and elasticity of which are close to those of the constituent material of the conveyor belts for which the joining device is provided, comprising flexible reinforcement means extending in the arms and in the central part, characterised by the fact that the reinforcement means (4) allow an elongation enabling the absorption, in connection with the constituent material, of the pullings caused by the path difference between the upper face and the lower face of the joining device, during the passage of the conveyor belt (1) over the rollers.

2. Joining device according to claim 1, characterised by the fact that the reinforcement means (4) exhibit specifically an elasticity allowing an elongation enabling the absorption, in connection with the constituent material of the pullings caused by the path difference between the upper face and the lower face of the joining device, during the passage of the conveyor belt (1) over the rollers.

3. Joining device according to claim 1, characterised by the fact that the reinforcement means (4) are arranged in such a way as to yield themselves longitudinally upto a certain limit, when submitted to forces acting in the longitudinal direction, being brought back to their initial dimension by the constituent elastic material of the joining device, when these forces are decreasing.

4. Joining device according to claim 3, characterised by the fact that the constituent fabric of the reinforcement (4) is woven in such a way as the weft is more loose than the warp.

5. Joining device according to claim 3, characterised by the fact that the reinforcement (4) is made up of cables, which are themselves very slightly extensible, by presenting zigzag shapes embedded in the constituent material of the joining device.

6. Joining device according to claim 3, characterised by the fact that the reinforcement (4) is made up of cables, which are themselves very slightly extensible, by presenting sinuosities embedded in the constituent material of the joining device.

7. Joining device according to anyone of the preceding claims, characterised by the fact that the reinforcement means (4) are arranged according to two layers, each one of the layers being embedded in two opposite arms (2), arranged on either sides of the central parts (6), each one of the reinforcement layer crossing the central part (6) of the joining device, by linking the parts of the reinforcement layer embedded in the arms, while remaining in the same plane as these latter.

8. Joining device according to claim 7, characterised by the fact that the reinforcement means further comprise two additional layers, each one embedded in two respective arms (2) each one of these arms being located in a different plane, on either side of the central part (6) of the joining device, the central parts of the two said layers connecting the parts embedded in the arms, by crossing in a skewed direction, the central part (6) of the joining device and intersecting therein, the additional layers being located more inwardly than the other layers.

9. Joining device according to anyone of the preceding claims, comprising strengthening washers (8) or small drilled strips (9) embedded in the arms (2) of the joining devices in such a way as their holes are in alignment with the holes (10) drilled in the arms, characterised by the fact that the reinforcements (4) are trimmed to the washers (8) or to the strips (9).

10. Joining device according to claim 9, the reinforcement (4) of which is made up of cables, characterised by the fact that each washer (8) is surrounded over about approximately 180° by a reinforcement cable loop.

11. Joining device according to claims 9 or 10, characterised by the fact the washers (8) or strips (9) face directed outwardly presents, with respect to the corresponding external face of the arm considered, an inward distance at least equal to the height of the head of the fastening means with stems (11), provided for the fastening.

12. Joining device according to anyone of the preceding claims, the arms (2) edges of which located the more distant from the central part (6) in the longitudinal direction are bevelled, the slope of the bevel beginning from the external surface and connecting the non-bevelled part of the edge, in such a way as the non-bevelled part has a relatively small height, characterised by the fact that the strips are rooted in the part of the arms which forms the edge which is the more distant from the central part in the longitudinal direction, in such a way as one of the edges of the strip has a bevelled shape and is in alignment with the bevelled edge of the arm involved.

13. Joining device according to claim 12, characterised by the fact that the reinforcement is trimmed to the bevelled strips.

14. Joining device according to claim 9, characterised by the fact that the cables which constitute the reinforcement (4) are arranged in two layers, one of the layers connecting one arm to the opposite arm located on the other side of the central part in the same plane, the other layer connecting the two other opposite arms, while remaining in the same plane, short length cables called linking cables (12) and arranged longitudinally, extending from one arm to the other and crossing the central part of the joining device, strips (9) being trimmed through strengthening cables (13) arranged transversally, these strengthening cables (13) passing in through holes provided in the strips (9), the linking cables (12) being bent around the strengthening cables (13) to form trimming loops, the free end (15) of the loop thus formed being embedded in the material, since it extends along the other end over a certain length.

15. Method for the implementation of a joining device according to one of the preceding claims, characterised by the fact that prior to the setting of the fastening means with stem (11), recesses are milled in locations selected by the user for setting the fastening means with stem (11), the said recesses being provided for receiving washers comprising through holes, then washers (8) with through holes are set therein, fastening means with stems are further on set in position, the depth of the milled recesses being at least equal to the thickness of the washers (8) increased by the height of the fastening means head.

16. Method for the implementation of a joining device according to one of the claims 1 to 8 included, characterised by the fact that before setting in position the fastening means with stem (11), recesses are milled at the locations selected by the user for the setting in position of the fastening means with stem (11), the said recesses being provided for receiving the heads of the fastening means with stem (11) having round and large head.

17. Method for the implementation of a joining device according to claims 15 or 16, characterised by the fact that during the setting of the fastening means with stem (11) the washers (8) or the strips (9) or the large heads of the fastening means with stem (11) are forcibly pinched in the direction of the reinforcement for sufficiently trimming by friction against the reinforcement, the said washers (8), the said strips (9) or the said large heads of the fastening means.

18. Method for the implementation of a joining device according to claims 15 or 16, characterised by the fact that since a certain quantity of the constituent material of the joining device remains in the form of a thin layer between the reinforcement and the washers (8), the strips (9) or the large heads of the fastening means with stem (11), these latter are forcibly pinched against this thin material layer integral to the reinforcement, sufficiently for trimming by friction the said washers, strips or heads of the fastening means with stem, to the assembly made up of the said thin layer of material and of the reinforcement (4).

19. Method for the implementation of a joining device according to one of the preceding claims 15 to 18, characterised by the fact that a fastening by sticking or by vulcanisation is combined with a fastening using fastening means with stem (11).
